# EUROPEAN PATENT APPLICATION

(11) **EP 3 689 980 A1**
(43) Date of publication of application: **05.08.2020**
(21) Application number: 19154757.9
(22) Date of filing: 31.01.2019
(51) Int. Cl.: C09D 7/20

(54) **FLUOROPOLYMER COMPOSITIONS**

(71) Applicant: 3M Innovative Properties Company, Saint Paul, MN 55133-3427 (US)
(72) Inventor: Verschuere, Alain, 9120 Melsele (BE); Audenaert, Frans, 9970 Kaprijke (BE)
(74) Representative: Mössner, Brigitte

(57) **Abstract**

A composition comprising at least one fluoropolymer and at least one ketone solvent corresponding to the formula:

Rf-X-Rfl

wherein Rf is selected from perfluorinated and partially fluorinated alkyl groups that may be interrupted once or more than once by an ether oxygen, a carbonyl or a combination thereof, and Rf1 is selected from perfluorinated, partially fluorinated and non-fluorinated alkyl groups that may be interrupted once or more than once by an ether oxygen, a carbonyl or a combination thereof, and X is a carbonyl (C=O) wherein the ketone solvent contains less than 50 carbon atoms,
and wherein the fluoropolymer is a copolymer of tetrafluoroethene (TFE) and one or more than one comonomer, wherein the polymer contains at least 30 % by weight of units derived from TFE and wherein the content of the units derived from the one or more comonomer is from about 1 to 70 % by weight based on the total weight of the copolymer which is 100 %.

Further provided are methods to make the compositions and applications of the composition for applying a fluoropolymer to a substrate and articles obtained by applying the composition.

## Description

### Field

The present disclosure relates to fluoropolymer compositions containing a solvent, in particular perfluoroelastomer compositions, and to methods of applying fluoropolymers onto substrates and articles using the fluoropolymer composition and to articles to which the fluoropolymers have been applied including coated articles and methods of coating articles.

### Background

Fluoropolymers have achieved outstanding commercial success due to their chemical and thermal inertness. They are used in a wide variety of applications where exposure to high temperatures and/or aggressive chemicals is encountered. The outstanding properties of the fluoropolymers are largely attributable to the stability and inertness of copolymerized monomer units making up the polymer backbone. Fluoropolymers, in particular perfluoroelastomers, are difficult to dissolve in solvents. However, fluoropolymer solutions could be processed easier and faster and by generating less polymer waste than processes solid fluoropolymers. Therefore, there is a need to find effective solvents for fluoropolymers. In international patent application WO2008/094758 A1 and WO2015/75450 A1 certain perfluorinated alkanes and perfluorinated alkyl amines liquids (commercially available under the trade designation FLUORINERT LIQUIDS or FLUTEC LIQUIDS) are reported to dissolve perfluoroelastomers for making coating compositions. In international patent application WO2018/107017 A1 fluorinated ethers were reported as effective solvents for making concentrated fluoroleastomer solutions.

There is a need to provide further solvents for dissolving fluoropolymers, in particular perfluorinated polymers, for example, perfluoroelastomers. Advantageously, such solvents are suitable for making concentrated fluoropolymer solutions having low viscosities.

### Summary

In one aspect there is provided a composition comprising at least one fluoropolymer and at least one ketone solvent corresponding to the formula:

Rf-X-Rf1

wherein Rf is selected from perfluorinated and partially fluorinated alkyl groups that may be interrupted once or more than once by an ether oxygen, a carbonyl or a combination thereof, and Rf1 is selected from perfluorinated, partially fluorinated and non-fluorinated alkyl groups that may be interrupted once or more than once by an ether oxygen, a carbonyl or a combination thereof, and X is a carbonyl (C=O); wherein the ketone solvent contains 50 or less than 50 carbon atoms, and wherein the fluoropolymer is a copolymer of tetrafluoroethene (TFE) and one or more than one comonomer, wherein the polymer contains at least 30 % by weight of units derived from TFE and wherein the content of the units derived from the one or more comonomer is from about 1 to 70 % by weight based on the total weight of the copolymer which is 100 %.

In another aspect there is provided a method of making the above composition comprising dissolving the fluoropolymer in the solvent.

In a further aspect there is provided an article comprising a coating obtained from the above composition.

In yet another aspect there is provided a method of applying a fluoropolymer to a substrate, comprising
(i) applying the composition to a substrate;
(ii) removing the solvent and, optionally, when the fluoropolymer is curable, subjecting the composition to curing, wherein the optional curing step may be carried out after, simultaneously with or prior to removing the solvent.

In a further aspect there is provided the use of the composition for applying a fluoropolymer layer onto a substrate.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. Also, it is to be understood that the phraseology and terminology used herein is for the purpose of description. Contrary to the use of "consisting", the use of "including", "containing", "comprising," or "having" and variations thereof is meant to encompass the items listed thereafter and equivalents thereof as well as additional items. The use of "a" or "an" is meant to encompass "one or more". Any numerical range recited herein describing a physical property or a concentration is intended to include all values from the lower value to the upper value of that range and including the endpoints. For example, a concentration range of from 1 % to 50 % is intended to be an abbreviation and to expressly disclose the values between the 1 % and 50 %, such as, for example, 2 %, 40 %, 10 %, 30 %, 1.5 %, 3.9 % and so forth.

Unless indicated otherwise, the total amounts of ingredients of a composition expressed as percentage by weight ("wt %" or % by weight", or "percent by weight") of that composition add up to 100 %, i. e. the total weight of the composition is always 100 % by weight unless stated otherwise.

Unless indicated otherwise, the total amounts of ingredients of a composition expressed as percentage by mole ("mole %" or "% by mole" or "percent by mole") of that composition add up to 100 %., i. e. the total amount of moles of the composition is always 100 % by mole unless stated otherwise.

### Fluoropolymer compositions

The fluoropolymer compositions typically are solutions of the fluoropolymer in the ketone solvent according to the present disclosure. The fluoropolymer compositions comprising the fluoropolymer dissolved in the ketone solvent.

Preferably, the fluoropolymer compositions are liquid compositions. Preferably, they are clear solutions but they may also contain suspended or dispersed materials, for example additives, including but not limited to, coating additives, pigments, filler, curatives and combinations thereof. Preferably, the fluoropolymer compositions have a viscosity of less than 2,000 mPas at room temperature (20 °C +/ -2 °C). In one embodiment the compositions are pastes. The pastes may have, for example, a viscosity of from 2,000 to 100.000 mPas at room temperature (20 °C +/- 2 °C).

Advantageously, compositions of comparatively low viscosities at comparatively high fluoropolymer content can be prepared. This is in particularly advantageous, for example, for using the fluoropolymer compositions to apply the fluoropolymer to substrates with rough or irregular surfaces or to substrate with small or complex architectural features, for example nanochannels or microchannels. Comparatively concentrated fluoropolymer compositions with low viscosities may be easier and faster applied to substrate to provide fluoropolymer deposits of sufficient thickness.

For example, fluoropolymer compositions according to the present disclosure can be prepared that have a fluoropolymer content from about 5 % by weight to 12 % by weight and have a viscosity of less than 600 mPas. For example, fluoropolymer compositions according to the present disclosure can be prepared that have a fluoropolymer content from about 13 % by weight to 20 % by weight and have a viscosity of less than 1800 mPas.

The fluoropolymer compositions according to the present disclosure may comprise, for example, from 0.01 to 55 % by weight or from 0.01 to 25 % by weight of fluoropolymer (based on the weight of the total composition), for or example from 5 to 50 % by weight, or from 10 to 45 % by weight, or from 5 to 25 % or from 10 to 15 % by weight of fluoropolymer (based on the total weight of the composition).

In one embodiment of the present disclosure the fluoropolymer compositions contain an amount of fluoropolymer from about 1 to 25 % by weight based on the total weight of the composition, preferably from about 5 to 15 % by weight based on the total weight of the composition. Preferably, the compositions contain from about 99 to 85 % by weight of the ketone solvent with the total weight of the composition amount of ingredients adding up to 100 % by weight. Preferably the composition is a liquid. Preferably the composition has a viscosity of less than 1950 mPas.

### Fluoropolymers

The fluoropolymers for the fluoropolymer compositions according to the present disclosure are copolymers and comprise repeating units derived from tetrafluoroethene (TFE) and from one or more than one comonomer.
The one or more than one comonomer may be non-fluorinated, partially fluorinated or perfluorinated and combinations thereof. Non-fluorinated comonomers include ethene and propene. Partially fluorinated comonomers include but are not limited to 1,1-difluoroethene (vinylidenefluoride, VDF) and vinyl fluoride (VF) or trifluorochloroethene or trichlorofluoroethene. Perfluorinated comonomers include hexafluroropropene (HFP) and unsaturated perfluorinated alkyl ethers (PAEs). The PAEs are preferably selected from the general formula:

Rf-O-(CF₂)ₙ-CF=CF₂

wherein n is 1 (allyl ether) or 0 (vinyl ether) and Rf represents a perfluoroalkyl residue which may be interrupted once or more than once by an oxygen atom. Rf may contain up to 10 carbon atoms, e. g. 1, 2, 3, 4, 5, 6, 7, 8, 9 or 10 carbon atoms. Preferably Rf contains up to 8, more preferably up to 6 carbon atoms and most preferably 3 or 4 carbon atoms. In one embodiment Rf has 3 carbon atoms. In another embodiment Rf has 1 carbon atom. Rf may be linear, branched and it may contain or not contain a cyclic unit. Specific examples of Rf include residues with one or more ether functions including but not limited to:
-(CF₂)-O-C₃F₇, -(CF₂)₂-O-C₂F₅, -(CF₂)ᵣ₃-O-CF₃, -(CF₂-O)-C₃F₇, -(CF₂-O)₂-C₂F₅, -(CF₂-O)₃-CF₃, - (CF₂CF₂-O)-C₃F₇, -(CF₂CF₂-O)₂-C₂F₅, -(CF₂CF₂-O)₃-CF₃.

Other specific examples for Rf include residues that do not contain an ether function and include but are not limited to -C₄F_{9;} -C₃F₇, -C₂F₅, -CF₃, wherein the C₄ and C₃ residues may be branched or linear, but preferably are linear.

Specific examples of suitable perfluorinated alkyl vinyl ethers (PAVE's) and perfluorinated alkyl allyl ethers (PAAE's) include but are not limited to perfluoro (methyl vinyl) ether (PMVE), perfluoro (ethyl vinyl) ether (PEVE), perfluoro (n-propyl vinyl) ether (PPVE-1), perfluoro-2-propoxypropylvinyl ether (PPVE-2), perfluoro-3-methoxy-n-propylvinyl ether, perfluoro-2-methoxy-ethylvinyl ether, CF₂=CF-O-CF₂-O-C₂F₅, CF₂=CF-O-CF₂-O-C₃F₇, CF₃-(CF₂)₂-O-CF(CF₃)-CF₂-O-CF(CF₃)-CF₂-O-CF=CF₂ and their allyl ether homologues. Specific examples of allyl ethers include but are not limited to CF₂=CF-CF₂-O-CF₃, CF₂=CF-CF₂-O-C₃F₇, CF₂=CF-CF₂-O-(CF₃)₃-O-CF₃.
Further examples include but are not limited to the vinyl ether described in European patent application EP 1,997,795 B1.

Perfluorinated ethers as described above are commercially available, for example from Anles Ltd. St. Petersburg, Russia and other companies or may be prepared according to methods described in U.S. Pat. No. 4,349,650 (Krespan) or European Patent 1,997,795 or by modifications thereof as known to the skilled person.

The fluoropolymers according to the present disclosure comprise at least 30 % by weight of units derived from TFE, preferably at least 50 % by weight (based on the total weight of the polymer). The total content of units derived from the one or more comonomer is from about 1 to 70 % by weight (based on the total weight of the copolymer which is 100 %).

Preferably, the fluoropolymers according to the present disclosure comprise at least 80 % by weight, preferably at least 90 % by weight based on the total weight of the polymer, more preferably at least 95 % by weight, or at least 97 % by weight of units derived from TFE together with one or more than one PAE as described above. More preferably, the fluoropolymers contain at least 30 % or at least 50 % by weight of units derived from TFE. The molar ratio of units derived from TFE to units derived from the perfluorinated alkyl ethers described above may be, for example, from 1:1 to 10:1. Typically, the fluoropolymers contain from about 10 to about 50 mole %, preferably from about 15 to about 35 mole % of units derived from one or more than one PAE based on total amount monomer units present in the polymer which is 100 mole %.

The fluoropolymers used in the present disclosure are preferably perfluorinated polymers. Perfluorinated polymers as used herein preferably contain only units derived from perfluorinated monomers as described above, because units derived from non-fluorinated monomers or molecules (compounds with no C-F bonds but with C-H bonds) or partially fluorinated monomers or molecules (compounds with C-F and C-H bonds) may reduce the chemical inertness and/or thermal stability of the polymer. However, minor amounts of units derived from such partially fluorinated or non-fluorinated comonomer or molecules may be tolerated depending on the end use application.

Therefore, a perfluorionated polymer according to the present disclosure contains less than 10 % by weight, preferably less than 1 % by weight, and preferably less than 0.1 % and most preferably 0 % by weight of units derived from non-perfluorinated monomers. A preferred perfluoropolymer comprises repeating units derived only from the perfluorinated monomers and comonomers described above and, optionally, units derived from one or more cure-site monomers and one or more modifying monomers as will be described below.

The fluoropolymers may be thermoplastic. In a preferred embodiment, the fluoropolymer is an elastomer. Elastomers typically are amorphous. They may have a glass transition temperature (Tg) of less than 26 °C, or less than 20 °C, less than or equal to 0 °C, or, for example, from -40 °C to 20 °C, or between -50 °C and 15 °C or between -55 °C and 10 °C. The fluoroelastomers may typically have a Mooney viscosity (ML 1+10 at 121 °C) of from about 2 to about 150, for example from 10 to t 100, or from 20 to 85.

Preferably, the fluoropolymer is a curable elastomer and more preferably the fluoropolymer is a perfluoroelastomer, i. e. a perfluorinated elastomer. Perfluoroelastomers are known in the art also as "FFKM" polymer. Preferably, the fluoroelastomer contains one or more than one cure-site. Cure sites are functional groups that react in the presence of a curing agent or a curing system to cross-link the polymers. The cure sites are typically introduced by copolymerizing cure-site monomers, which are functional comonomers already containing the cure sites or precursors thereof and/or by using cure-site containing chain-transfer agents as will be described in greater detail below. In a particularly preferred embodiment the fluoropolymer is a curable perfluoroelastomer, for example a perfluoroelastomer of the FFKM-type as known in the art. The comonomers (and cure-site monomers and modifying monomers as applicable) may be used in effective amounts to generate a curable fluoropolymer with the properties described herein, for example having a glass transition temperature (Tg) as described above, for example of less than 25 °C or less than or equal to 0 °C and/or a fluorine content of between 69 and 73 % by weight (based on the total weight of the polymer) as is known in the art. The fluorine content may be achieved by selecting the comonomers and their amounts accordingly. It can be determined as nominal fluorine content by determining the amount of monomers and calculating their fluorine content - by excluding contributions to the fluorine content from other components like, for example, cure site monomers, modifiers and chain transfer agents (CTA's).

The fluoropolymers can be prepared by methods known in the art, such as bulk, suspension, solution or aqueous emulsion polymerisation. For example, the polymerisation process can be carried out by free radical polymerisation of the monomers alone or as solutions, emulsions, or dispersions in an organic solvent or water. Seeded polymerizations may or may not be used. The fluoropolymers may have a monomodal or bi-modal or multi-modal weight distribution. The fluoropolymers may have, for example, a core-shell structure or they may be random polymers or may have a different polymer architecture. Core-shell polymers are polymers where towards the end of the polymerization, typically after at least 50 % by mole of the comonomers are consumed, the comonomer composition or the ratio of the comonomers or the reaction speed is altered to create a shell of different composition.

Commercially available fluoropolymers, in particular perfluoroelastomers, may be used in the compositions of the present disclosure.

### Cure sites, cure site monomers and chain-transfer agents

The curable fluoropolymers provided herein may further comprise at least one or more cure sites. The cure sites react with a curing agent or a curing system by which the polymers are cross-linked (cured). The curable elastomers may be, for example, peroxide curable and contain cure sites that are reactive to a peroxide curing system. The cure sites may be introduced into the polymer by using cure site monomers, i. e. functional monomers as will be described below, functional chain-transfer agents and starter molecules. Instead or in addition to peroxide-curable cure sites, the fluoroelastomers may contain cure sites that are reactive to other curing systems. An example widely used in the art includes cure sites containing nitrile or nitrile groups. Such cure sites are reactive, for example, to curing systems that generate ammonia, as well as peroxide cure.
Suitable cure sites comprise iodine atoms. Iodine-containing cure site end groups can be introduced by using an iodine-containing chain transfer agent in the polymerization. Iodine-containing chain transfer agents will be described below in greater detail. In addition, halogenated redox systems as described below may be used to introduce iodine end groups.
The curable fluoroelastomers may also contain cure sites in the back bone or as pending groups in addition or as an alternative to the cure sites at a terminal position. Cure sites within the polymer backbone can be introduced by using a suitable cure-site monomer. Cure-site monomers are monomers containing one or more functional groups that can act as cure sites or, less preferred, contain a precursor that can be converted into a cure site.
In addition to iodine cure sites, other cure sites may also be present, for example Br-containing cure sites or cure sites containing one or more nitrile groups. Br-containing cure sites may be introduced by Br-containing cure-site monomers. Nitrile-containing cure sites are typically introduced by cure-site monomers containing a nitrile group. Preferably, the cure site monomers are perfluorinated.

Examples of cure-site comonomers include for instance:
(a) bromo- or iodo- (per)fluoroalkyl-(per)fluorovinylethers, for example including those having the formula:

   ZRf-O-CX=CX₂

   wherein each X may be the same or different and represents H or F, Z is Br or I, Rf is a C1-C12 (per)fluoroalkylene, optionally containing chlorine and/or ether oxygen atoms. Suitable examples include ZCF₂-O-CF=CF₂, ZCF₂CF₂-O-CF=CF₂, ZCF₂CF₂CF₂-O-CF=CF₂, CF₃CFZCF₂-O-CF=CF₂ or ZCF₂CF₂-O-CF₂CF₂CF₂-O-CF=CF₂ wherein Z represents Br of I; and
(b) bromo- or iodo perfluoroolefins such as those having the formula:

   Z'-(Rf)r-CX=CX₂

   wherein each X independently represents H or F, Z' is Br or I, Rf is a C₁-C₁₂ perfluoroalkylene, optionally containing chlorine atoms and r is 0 or 1; and
(c) non-fluorinated bromo and iodo-olefins such as vinyl bromide, vinyl iodide, 4-bromo- 1-butene and 4-iodo-1-butene.

Specific examples include but are not limited to compounds according to (b) wherein X is H, for example compounds with X being H and Rf being a C1 to C3 perfluoroalkylene. Particular examples include: bromo- or iodo-trifluoroethene, 4-bromo-perfluorobutene-1, 4-iodo-perfluorobutene-1, or bromo- or iodo-fluoroolefins such as 1-iodo,2,2-difluroroethene, 1-bromo-2,2-difluoroethene, 4-iodo-3,3,4,4,-tetrafluorobutene-1 and 4-bromo-3,3,4,4-tetrafluorobutene-1; 6-iodo-3,3,4,4,5,5,6,6-octafluorohexene-1.

Typically, the amount of iodine or bromine or their combination in the fluoropolymer is between 0.001 and 5 %, preferably between 0.01 and 2.5 %, or 0.1 to 1 % or 0.2 to 0.6 % by weight with respect to the total weight of the fluoropolymer. In one embodiment the curable fluoropolymers contain between 0.001 and 5 %, preferably between 0.01 and 2.5 %, or 0.1 to 1 %, more preferably between 0.2 to 0.6 % by weight of iodine based on the total weight of the fluoropolymer.

In addition to the I- and/or Br-cure sites described above, or as an alternative, the curable fluoropolymers may contain nitrile-containing cure sites. Nitrile-containing cure sites may be reactive to other cure systems for example, but not limited to, bisphenol curing systems, peroxide curing systems or triazine curing systems. Examples of nitrile containing cure site monomers correspond to the following formulae:
CF₂=CF-CF₂-O-Rf-CN; CF₂=CFO(CF₂)ᵣCN; CF₂=CFO[CF₂CF(CF₃)O]ₚ(CF₂)ᵥOCF(CF₃)CN; CF₂=CF[OCF₂CF(CF₃)]ₖO(CF₂)ᵤCN;
wherein, r represents an integer of 2 to 12; p represents an integer of 0 to 4; k represents 1 or 2; v represents an integer of 0 to 6; u represents an integer of 1 to 6, Rf is a perfluoroalkylene or a bivalent perfluoroether group. Specific examples of nitrile containing fluorinated monomers include but are not limited to perfluoro (8-cyano-5-methyl-3,6-dioxa-1-octene), CF₂=CFO(CF₂)₅CN, and CF₂=CFO(CF₂)₃OCF(CF₃)CN.
The amount of units derived from cure-site comonomers depends on the desired cross-linking density. Cure-site monomers may be used in amounts of 0 to 10 % by weight, typically in amounts of less than 10 % by weight or even less than 5 % by weight based on the total amount of comonomers used.

The fluoroelastomers may also be of dual cure type. They may also contain different cure sites that are reactive to different curing systems.

By using halogenated chain transfer agents terminal cure sites may be introduced. Chain transfer agents are compounds capable of reacting with the propagating polymer chain and terminating the chain propagation. Examples of chain transfer agents reported for the production of fluoroelastomers include those having the formula RIₓ, wherein R is an x-valent fluoroalkyl or fluoroalkylene radical having from 1 to 12 carbon atoms, which, may be interrupted by one or more ether oxygens and may also contain chlorine and/or bromine atoms. R may be Rf and Rf may be an x-valent (per)fluoroalkyl or (per)fluoroalkylene radical that may be interrupted once or more than once by an ether oxygen. Examples include alpha-omega diiodo alkanes, alpha-omega diiodo fluoroalkanes, and alpha-omega diiodoperfluoroalkanes, which may contain one or more catenary ether oxygens. "Alpha-omega" denotes that the iodine atoms are at the terminal positions of the molecules. Such compounds may be represented by the general formula X-R-Y with X and Y being I and R being as described above. Specific examples include di-iodomethane, alpha-omega (or 1,4-) diiodobutane, alpha-omega (or 1,3-) diiodopropane, alpha-omega (or 1,5-) diiodopentane, alpha-omega (or 1,6-) diiodohexane and 1,2-diiodoperfluoroethane. Other examples include fluorinated di-iodo ether compounds of the following formula:

R_{f}-CF(I)- (CX₂)ₙ-(CX₂CXR)ₘ-O-R"f-Oₖ-(CXR'CX₂)ₚ-(CX₂)_{q}-CF(I)-R'_{f}

wherein X is independently selected from F, H, and Cl; R_{f} and R'_{f} are independently selected from F and a monovalent perfluoroalkane having 1-3 carbons; R is F, or a partially fluorinated or perfluorinated alkane comprising 1-3 carbons; R"_{f} is a divalent fluoroalkylene having 1-5 carbons or a divalent fluorinated alkylene ether having 1-8 carbons and at least one ether linkage; k is 0 or 1; and n, m and p are independently selected from an integer from 0-5, wherein, n plus m are at least 1 and p plus q are at least 1.

### Modifying monomers:

The fluoropolymers may or may not contain units derived from at least one modifying monomer. The modifying monomers may introduce branching sites into the polymer architecture. Typically, the modifying monomers are bisolefins, bisolefinic ethers or polyethers. The bisolefins and bisolefinic (poly)ethers may be perfluorinated, partially fluorinated or non-fluorinated. Preferably they are perfluorinated. Suitable perfluorinated bisolefinic ethers include those represented by the general formula:

CF₂=CF-(CF₂)ₙ-O-(Rf)-O-(CF₂)ₘ-CF=CF₂

wherein n and m are independent from each other either 1 or 0 and wherein Rf represents a perfluorinated linear or branched, cyclic or acyclic aliphatic or aromatic hydrocarbon residue that may be interrupted by one or more oxygen atoms and comprising up to 30 carbon atoms. A particular suitable perfluorinated bisolefinic ether is a di-vinylether represented by the formula:

CF₂=CF-O-(CF₂)ₙ-O-CF=CF₂

wherein n is an integer between 1 and 10, preferably 2 to 7, e. g. n may be 1, 2, 3, 4, 5, 6 or 7. More preferably, n represents an uneven integer, for example 1, 3, 5 or 7.

Further specific examples include bisolefinic ethers according the general formula

CF₂=CF-(CF₂)ₙ-O-(CF₂)ₚ-O-(CF₂)ₘ-CF=CF₂

wherein n and m are independently either 1 or 0 and p is an integer from 1 to 10 or 2 to 7. For example n may be selected to represent 1, 2, 3, 4, 5, 6 or 7, preferably, 1, 3, 5 or 7.

Further suitable perfluorinated bisolefinic ethers can be represented by the formula

CF₂=CF-(CF₂)ₚ-O-(R_{af}O)ₙ(R_{bf}O)ₘ-(CF₂)_{q}-CF=CF₂

wherein R_{af} and R_{bf} are different linear or branched perfluoroalkylene groups of 1 - 10 carbon atoms, in particular 2 to 6 carbon atoms, and which may or may not be interrupted by one or more oxygen atoms. R_{af} and/or R_{bf} may also be perfluorinated phenyl or substituted phenyl groups; n is an integer between 1 and 10 and m is an integer between 0 and 10, preferably m is 0. p and q are independent from each other either 1 or 0.

Such modifiers can be prepared by methods known in the art and are commercially available, for example, from Anles Ltd, St. Petersburg, Russia.

Preferably, the modifiers are not used or only used in low amounts. Typical amounts include from 0 to 5 %, or from 0 to 1.4 % by weight based on the total weight of the polymer. Modifiers may be present, for example, in amounts from about 0.1 % to about 1.2 % or from about 0.3 % to about 0.8 % by weight based on the total weight of the fluoropolymer.

Although only perfluorinated bisolefinic ethers have been exemplified partially or non-fluorinated homologues may also be used as well as bisolefinic analogues. Combinations of modifiers may also be used.

### Curing systems

The fluoropolymer compositions according to the present disclosure comprising one or more than on curable fluoroelastomer may further comprise one or more curing systems for curing the curable fluoroelastomer.

The curable fluoropolymer compositions containing a curing system may typically have an onset of cure (Ts2) of less than 1 minute at 180 °C.

In one embodiment the fluoropolymer compositions provided herein may contain one or more curing system for curing the curable fluoroelastomer, including, for example, a peroxide cure system. Other cure systems include, but are not limited to, nitrogen-based cure systems as will be described below.

The peroxide cure systems typically include an organic peroxide. The peroxide will cause curing of the fluorinated polymer to form a cross-linked (cured) fluoropolymer when activated. Suitable organic peroxides are those which generate free radicals at curing temperatures. Examples include dialkyl peroxides or bis(dialkyl peroxides), for example, a di-tertiarybutyl peroxide having a tertiary carbon atom attached to the peroxy oxygen. Specific examples include 2,5-dimethyl-2,5-di(tertiarybutylperoxy)hexyne-3 and 2,5-dimethyl-2,5-di(tertiarybutylperoxy)hexane; dicumyl peroxide, dibenzoyl peroxide, tertiarybutyl perbenzoate, alpha,alpha'-bis(t-butylperoxy-diisopropylbenzene), and di[1,3-dimethyl-3-(t- butylperoxy)-butyl]carbonate. Generally, about 1 to 5 parts of peroxide per 100 parts of fluoropolymer may be used.

The curing agents may also be present on carriers, for example silica containing carriers. A peroxide cure system may also include in addition one or more coagent. Typically, the coagent includes a polyunsaturated compound which is capable of cooperating with the peroxide to provide a useful cure. These coagents may typically be added in an amount between 0.1 and 10 parts per hundred parts fluoropolymer, preferably between 2 and 5 parts per hundred parts fluoropolymer. Examples of useful coagents include triallyl cyanurate; triallyl isocyanurate; triallyl trimellitate; tri(methylallyl)isocyanurate; tris(diallylamine)-s- triazine; triallyl phosphite; (N,N')-diallyl acrylamide; hexaallyl phosphoramide; (N,N,N,N)- tetraalkyl tetraphthalamide; (N,N,N',N-tetraallylmalonamide; trivinyl isocyanurate; 2,4,6- trivinyl methyltrisiloxane; N,N'-m-phenylenebismaleimide; diallyl-phthalate and tri(5-norbornene-2-methylene)cyanurate. Particularly useful is triallyl isocyanurate.

Suitable curing systems for nitrile cure sites are known in the art and include, but are not limited to amidines, amidoximes and others described in WO2008/094758 A1, incorporated herein by reference in appropriate part. They may include nitrogen-containing nucleophilic compounds selected from heterocyclic secondary amines; guanidines; compounds which decompose in-situ at a temperature between 40 °C and 330 °C to produce a guanidine; compounds which decompose in-situ at a temperature between 40 °C and 330 °C to produce a primary or secondary amine; nucleophilic compounds of the formula R₁-NH-R₂, wherein R₁ is H-, a C₁-C₁₀ aliphatic hydrocarbon group, or an aryl group having hydrogen atoms in the alpha positions, R₂ is a C₁-C₁₀ aliphatic hydrocarbon group, an aryl group having hydrogen atoms in the alpha positions, -CONHR₃, -NHCO₂R₃, or -OH ', and R₃ is a C₁-C₁₀ aliphatic hydrocarbon group; and substituted amidines of the formula HN=CR₄NR₅R₆, wherein R₄, R₅, R₆ are independently H-, alkyl or aryl groups and wherein at least one of R₄, R₅ and Re is not H-.
As used herein, "heterocyclic secondary amines" refers to aromatic or aliphatic cyclic compounds which have at least one secondary amine nitrogen contained within the ring. Such compounds include, for example, pyrrole, imidazole, pyrazole, 3-pyrroline, and pyrrolidine.
Guanidines included in this disclosure are compounds derived from guanidine, i. e. compounds which contain the radical, -NHCNHNH-, such as, but not limited to, diphenylguanidine, diphenylguanidine acetate, aminobutylguanidine, biguanidine, isopentylguanidine, di-σ-tolylguanidine, o- tolylbiguanide, and triphenylguanidine. Compounds which decompose in-situ at a temperature between 40 °C and 330 °C to produce either a primary or secondary amine include, but are not limited to, di- or poly-substituted ureas (e. g. 1,3-dimethyl urea); N-alkyl or -dialkyl carbamates (e. g. N-(tert-butyloxycarbonyl)propylamine); di- or poly-substituted thioureas (e. g. 1,3-dimethyl-thiourea); aldehyde-amine condensation products (e. g. 1,3,5-trimethylhexahydro-1,3,5-triazine); N,N'-dialkyl phthalamide derivatives (e. g. N,N'-dimethylphthalamide); and amino acids. Illustrative examples of nucleophilic compounds of formula R₁-NH-R₂ include, but are not limited to, aniline, t-butylcarbazate and C₁-C₁₀ aliphatic primary amines (such as methylamine). Illustrative examples of substituted amidines of the formula HN=CR₄NR₅R₆ include benzamidine and N-phenylbenzamidine. It is believed that most of these nucleophilic compounds act as curing agents by catalyzing the trimerization of polymer chain bound nitrile groups to form triazine rings, thus crosslinking the fluoroelastomer. The nitrogen-containing nucleophilic compounds may be used alone or in combination with each other or in combination with other curatives. When used in combination with other curatives the level at which the nitrogen-containing nucleophilic compound may be present is generally from 0.01 to 5 parts nucleophilic compound per 100 parts fluoroelastomer. Preferably 0.05-3.0 parts nucleophilic compound per 100 parts fluoroelastomer may be used. Curable fluoroelastomer compositions containing above 5 parts nucleophilic compound per 100 parts fluoroelastomer may generally be scorchy and may result in compositions of high Mooney viscosity.
Other curatives that may be used alone or in combination with one or more of the nitrogen-containing curatives described above and that are capable of crosslinking the fluoroelastomer include organotin compounds or certain amino group-containing benzene compounds. Suitable organotin compounds include allyl-, propargyl-, triphenyl- and allenyl tin curatives. Another type of curatives includes bis(aminophenols) and bis(aminothiophenols) of the formulae 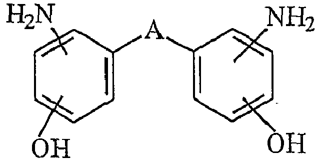 and 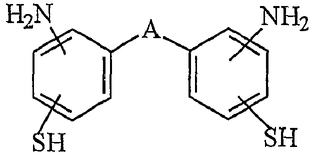 and tetraamines of the formula 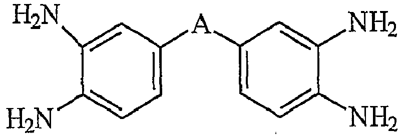 where A is SO₂, O, CO, alkyl of 1-6 carbon atoms, perfluoroalkyl of 1-10 carbon atoms, or a carbon-carbon bond linking the two aromatic rings. The amino and hydroxyl groups in formulas XI and XII above, are interchangeably in the meta and para positions with respect to the group A. Preferably, the second curing agent is a compound selected from the group consisting of 2,2-bis[3-amino-4-hydroxyphenylhexafluoropropane; 4,4'-sulfonylbis(2-aminophenol); 3,3'- diaminobenzidine; and 3,3',4,4'-tetraaminobenzophenone. The first of these curing agents are referred to as diaminobisphenol AF. The curing agents can be prepared as disclosed in U.S. Patent Number 3,332,907 to Angelo.

Diaminobisphenol AF can be prepared by nitration of 4,4'-[2,2,2-trifluoro-1-(trifluoromethyl)ethylidene]bisphenol (i. e. bisphenol AF), preferably with potassium nitrate and trifluoroacetic acid, followed by catalytic hydrogenation, preferably with ethanol as a solvent and a catalytic amount of palladium on carbon as catalyst.
An appropriate level of curatives can be selected by considering cure properties, for example the time to develop maximum moving die rheometer (MDR) torque and minimum Mooney scorch of the curable compositions. The optimum level will depend on the particular combination of fluoroelastomer and curative and the desired properties of the cured elastomer.

### Additives

Compositions containing curable fluoroelastomers may further contain additives as known in the art. Examples include acid acceptors. Such acid acceptors can be inorganic or blends of inorganic and organic acid acceptors. Examples of inorganic acceptors include magnesium oxide, lead oxide, calcium oxide, calcium hydroxide, dibasic lead phosphate, zinc oxide, barium carbonate, strontium hydroxide, calcium carbonate, hydrotalcite, etc. Organic acceptors include epoxies, sodium stearate, and magnesium oxalate. Particularly suitable acid acceptors include magnesium oxide and zinc oxide. Blends of acid acceptors may be used as well. The amount of acid acceptor will generally depend on the nature of the acid acceptor used. Typically, the amount of acid acceptor used is between 0.5 and 5 parts per 100 parts of fluorinated polymer.

The fluoropolymer composition may contain further additives, such as stabilizers, plasticizers, lubricants, fillers, and processing aids typically utilized in fluoropolymer processing or compounding, provided they have adequate stability for the intended service conditions. A particular example of additives includes carbon particles, like carbon black, graphite, soot. Further additives include but are not limited to pigments, for example iron oxides, titanium dioxides. Other additives include but are not limited to clay, silicon dioxide, barium sulphate, silica, glass fibers, or other additives known and used in the art.

### Solvents

The fluoropolymer compositions according to the present disclosure contain at least one ketone solvent. The ketone solvent corresponds to the formula

Rf-X-Rf1

wherein Rf is selected from perfluorinated and partially fluorinated alkyl groups that may be interrupted once or more than once by an ether oxygen, a carbonyl or a combination thereof, and Rf1 is selected from perfluorinated, partially fluorinated and non-fluorinated alkyl groups that may be interrupted once or more than once by an ether oxygen, a carbonyl or a combination thereof, and X is a carbonyl (C=O); wherein the ketone solvent contains 50 carbon atoms or less. Preferably the solvent contains 25 carbon atoms or less than 25 caron atoms, more preferably, it contains less than 15 carbon atoms. Preferably Rf1 is fluorinated or perfluorinated. Preferably, either Rf or Rf1 or both are branched. Typically, Rf may have from 1 to 48 carbon atoms, preferably from 1 to 12. Rf may be a primary, secondary or tertiary fluorinated or perfluorinated or fluorinated alkyl residue. A fluorinated residue has C-H and C-F bonds. A perfluorinated residue has C-F but no C-H bonds.

In one embodiment Rf is a perfluorinated primary alkyl residue linked to the carbonyl group. In this case Rf corresponds to R_{fa}-CF₂- and the ketone solvent can be described by the general formula: R_{fa}-CF₂-X-Rf1, with R_{fa} being selected from a fluorine atom and a fluorinated or perfluorinated alkyl residue that may be interrupted once or more than once by an ether oxygen, a carbonyl or a combination thereof.

In one embodiment Rf is a secondary alkyl residue and Rf corresponds to (R_{f}² R_{f}³)CF-. The solvent then corresponds to the formula (R_{f}²R_{f}³)CF-X-Rf1 with R_{f}² and R_{f}³ independently being selected from a fluorinated or perfluorinated alkyl residue that may be interrupted once or more than once by an ether oxygen, a carbonyl or a combination thereof.

In one embodiment Rf is a tertiary alkyl residue the carbon atom linked to the carbonyl group is also linked to three carbon atoms of three partially and/or perfluorinated alkyl chains and Rf corresponds to (R_{f}⁴R_{f}⁵R_{f}⁶)-C-. The ketone solvent then corresponds to (R_{f}⁴R_{f}⁵R_{f}⁶)-C-XRf1. R_{f}¹; R_{f}²; R_{f}³; R_{f}⁴ ; R_{f}⁵; R_{f}⁶ are independently selected from a perfluorinated or partially fluorinated alkyl group that may be interrupted once or more than once by an ether oxygen, a carbonyl or a combination thereof. Rf may be linear or branched or cyclic.

Rf1 may be the same or different than Rf. Typically, Rf1 may have from 1 to 48 carbon atoms (provided the total number of carbon atoms of the solvent is preferably 50 or less). Preferably Rf1 has from 1 to 12 carbon atoms. Rf2 may be a primary, secondary or tertiary fluorinated or perfluorinated or non-fluorinated alkyl residue, although a non-fluorinated residue is less preferred. A fluorinated residue has C-H and C-F bonds. A perfluorinated residue has C-F but no C-H bonds. A non-flurinated residue has no C-F bonds.

In one embodiment Rf1 is a perfluorinated primary alkyl residue linked to the carbonyl group. In this case Rf1 corresponds to R_{fa}-CF₂- and the ketone solvent can be described by the general formula: R_{fa}-CF₂-X-Rf, with R_{fa} being selected from a fluorine atom and a fluorinated, perfluorinated or a non-fluorinated alkyl residue that may be interrupted once or more than once by an ether oxygen, a carbonyl or a combination thereof.

In one embodiment Rf1 is a secondary alkyl residue and Rf1 corresponds to (R_{f}²R_{f}³)CF-. The solvent then corresponds to the formula (R_{f}²R_{f}³)CF-X-Rf with R_{f}² and R_{f}³ independently being selected from a fluorinated, a non-fluorinated or a perfluorinated alkyl residue that may be interrupted once or more than once by an ether oxygen, a carbonyl or a combination thereof.

In one embodiment Rf1 is a tertiary alkyl residue and the carbon atom linked to the carbonyl group is also linked to three carbon atoms of three partially and/or perfluorinated alkyl and/or non-fluorinated alkyl chains and Rf1 corresponds to (R_{f}⁴ R_{f}⁵ R_{f}⁶)-C-. The ketone solvent then corresponds to (R_{f}⁴R_{f}⁵R_{f}⁶)-C-XRf. R_{f}¹; R_{f}²; R_{f}³; R_{f}⁴; R_{f}⁵ ; R_{f}⁶ are independently selected from a perfluorinated or partially fluorinated or non-fluorinated alkyl group that may be interrupted once or more than once by an ether oxygen, a carbonyl or a combination thereof. Rf1 may be linear or branched or cyclic, preferably Rf1 is cyclic.

In one embodiment the ketone solvent corresponds to the formula:

CₚF₂ₚ₊₁-X-C_{q}F_{2q+1}

wherein q is an integer from 1 to and 48 and p is an integer from 1 to 48 with the proviso that the sum of p and q is not greater than 49. X denotes a carbonyl.

In another embodiment the ketone solvent corresponds to the formula:

CₚF₂ₚ₊₁-X-C_{q}F_{2q+1}

wherein q is an integer from 1 to and 23 and p is an integer from 1 to 23 with the proviso that the sum of p and q is not greater than 24. X denotes as carbonyl.

In a more preferred embodiment the ketone solvent corresponds to the formula:

CpF₂ₚ₊₁-X-CqF_{2q+1}

wherein X is a carbonyl (C=O) and q is an integer from 1 to 11, for example 1, 2,3,4,5,6,7,8,9,10 or 11 and p is an integer from 1 to 11, for example 1,2,3,4,5, 6, 7, 8, 9,10 or 11. Preferably, CₚF₂ₚ₊₁ is branched. Preferably, CₚF₂ₚ₊₁ is branched and q is 1, 2 or 3.

Particular examples of ketone solvents include but are not limited to CF₃CF₂C(O)CF(CF₃)₂ (dodecafluoro-2-methylpentan-3-one); (CF₃)₂CFC(O)CF(CF₃)₂ (tetradecafluoro-2,4-dimethylpentan-3-one); CF₃CF₂CF₂C(O)CF(CF₃) tetradecafluoro-2-methylhexan-3-one; CF₃C(O)CF(CF₃)₂ (decafluoro-3-methylbutan-2-one) and mixtures thereof. Such ketone solvents are commercially available, for example, under the trade designation NOVEC from 3M Company, St. Paul, USA.

The solvent may be present in an amount of at least 25 % by weight, preferably at least 35 % by weight and more preferably at least 55 % by weight (based on the total weight of the composition). For example, typical amounts of solvent include ranges of from about 25 to 99.99 % by weight based on the weight of the composition, for example from about 30 to 95 % by weight, or from 50 to 90 % by weight.

The solvent may also be present in an amount of at least 50 % by weight based on the total weight of fluoropolymer. For example, it may be present in an amount of from about 50 to 99.99 % by weight based on the weight of the fluoropolymer for example from about 55 to 95 % by weight, or from 75 to 90 % by weight based on the weight of the fluoropolymer.

The solvent is preferably liquid at ambient conditions (20 °C, 1 bar) but may also be gaseous at ambient conditions in which case the compositions may be prepared at reduced temperatures or at pressures above ambient pressure. Typically, the solvent has a boiling point of 190 °C or less, for example between 15 °C and 120 °C, so that it can be easily removed. In fact, the low boiling point may be an advantage when preparing coatings or applying the fluoropolymer to complex articles, for example microchannel, microgrooves or nanochannels or nanogrooves where it may be desired to remove the solvent easily and quickly.

The ketone solvents may be used alone, or they may be present in combination with other solvents, which may be fluorochemical solvents or non-fluorochemical solvents. A combination of different ketone solvents according to the present disclosure may be used also.

### Preparation of the fluoropolymer compositions

The fluoropolymer compositions may be prepared by mixing the polymer, the optional curing system and optional additives and the solvent. Preferably, the fluoropolymer is first mixed together with other solid ingredients and in particular with the curing system. Mixing can be carried out in conventional mixing or rubber processing equipment to provide a solid mixture, i. e. a solid polymer containing the additional ingredients, also referred to in the art as a "compound". Typical equipment includes rubber mills, internal mixers, such as Banbury mixers, and mixing extruders. During mixing the components and additives are distributed uniformly throughout the resulting fluorinated polymer "compound" or polymer sheets. The compound is then preferably comminuted, for example by cutting it into smaller pieces and is then dissolved in the solvent. Alternatively, the ingredients may be combined in the solvent simultaneously or subsequently.

### Methods of applying the fluoropolymers to a substrate

The fluoropolymers according to the present disclosure can be applied to a substrate by applying a fluoropolymer composition according to the present disclosure to a substrate and removing the solvent.

In one embodiment the fluoropolymer is a curable fluoroelastomer and the composition contains one or more curing agent for curing the fluoroelastomer. The elastomer can be subjected to curing after it has been applied to the substrate. Prior to, during or after curing the solvent may be reduced or completely removed, for example by evaporation, by applying a heat treatment or a treatment under reduced pressure. Curing of a fluoroelastomer may be achieved by the conditions suitable for the curing system and cure sites used. Depending on the cure sites and curing system used curing may be achieved by heat-treating the curable fluoroelastomer composition or at room temperature, or by irradiation, for example UV-curing or actinic irradiation, for example e-beam curing. The curing is carried out at an effective temperature and effective time to create a cured fluoroelastomer. Optimum conditions can be tested by examining the fluoroelastomer for its mechanical and physical properties. Curing may be carried out under pressure or without pressure in an oven. A post curing cycle at increased temperatures and or pressure may be applied to ensure the curing process is fully completed. Post curing may be carried out at a temperature between 170 °C and 250 °C for a period of 0.1 to 24 hours. The curing conditions depend on the curing system used.

An advantage of the compositions according to the present disclosure is that they can be used to prepare coatings or fluoropolymer depositions of high or low thickness by either using diluted or concentrated fluoropolymer compositions. The solvents according to the present disclosure allow for the preparation of concentrated solutions that are nevertheless of low viscosity. Therefore, homogeneous coatings may be provided, in particular on rough or uneven substrates. Easier fluoropolymer deposition or coating of micro or nanochannels or other complex structures may be achieved. Application of the fluoropolymers onto a substrate may allow for better protection of the substrates for example but not limited against corrosion or chemical degradation. The fluoropolymer compositions according to the present disclosure may be used in various methods of applying the fluoropolymer to a substrate, including, for example, impregnating substrates, printing onto substrates (for example screen printing, or 3D printing), or coating substrates, for example but not limited to spray coating, painting, dip coating, roller coating, bar coating, solvent casting, paste coating. Suitable substrates may include any solid surface and may include substrates selected from glass, plastics, rubbers, fluoropolymers, polymer-non-polymer composites, polymer-polymer composites, metals, metal alloys, wood, paper, fabric among others and may include but are not limited to circuit boards, garments, reactors, microreactors, medical devices or components of medical devices, valves or components of valves. The compositions may also be applied to a substrate by 3D printing, for example, as inks for a 3D printer. Articles containing a coating or a deposited fluoropolymer obtained from the fluoropolymer compositions provided herein include but are not limited to impregnated textiles, for example protective clothing. Textiles may include woven or non-woven fabrics. Other articles may include articles exposed to corrosive environments, for example seals and components of seals and valves used in chemical processing, for example, but not limited to components or linings of chemical reactors, molds, chemical processing equipment for example, for etching, or valves, pumps and tubing, in particular for corrosive substances or hydrocarbon fuels or solvents; combustion engines, electrodes, fuel transportation, containers for acids and bases and transportation systems for acids and bases, electrical cells, fuel cells, electrolysis cells and articles used in or for etching.

The coatings or fluoropolymer deposits obtained by using the compositions according to the present disclosure may be colored in case the compositions contain pigments, for example titanium dioxides or black fillers like graphite or soot, or it may be colorless in case pigments or black fillers are absent.

Bonding agents and primers may be used to pretreat the surface of the substrate before coating. For example, bonding of the coating to metal surfaces may be improved by applying a bonding agent or primer. Examples include commercial primers or bonding agents, for example those commercially available under the trade designation CHEMLOK.

The following examples are provided to further illustrate the present disclosure without any intention to limit the disclosure to the specific examples and embodiments provided.

### Methods

### Glass transition temperature (Tg):

The Tg can be measured by differential scanning calorimetry, for example using a TA Instruments Q200 modulated DSC. Conditions of measurements were: heating rate from -150 °C to 50 °C at 2-3 °C / minute. The modulation amplitude was +/- 1 °C per minute during 60 sec. Reported is the midpoint Tg (°C).

### Mooney viscosity:

Mooney viscosities can be determined in accordance with ASTM D1646 - 07(2012), 1 minute pre-heat and a 10 minute test at 121 °C (ML 1+10 at 121 °C).

### (Solution) Viscosity:

Brookfield viscosities can be measured on a Brookfield viscometer LV using spindle 3 at room temperature (20-22 °C).

### Examples

### Example 1

In this example a liquid perfluoroelastomer composition was prepared. Firstly, a perfluoroelastomer composition was prepared by mixing a peroxide-curable perfluoroelastomer (87 parts by weight) with a total of 13 parts by weight of peroxide curative, a coagent and filler. This compounded formulation was cut into small pieces, approximately 0.5 cm in size. These pieces were added to a beaker containing dodecafluoro-2-methylpentan-3-one in an amount that the mixture contains 10 % by weight based on the total mixture of perfluoroelastomer. The beaker was placed on a roller mixer and continuously mixed overnight. The perfluoroelastomer was completely dissolved and the clear solution had a viscosity of 500 mPas.

The solution can be used, for example, for bar coating an aluminum panel. The solution can be cured in an oven for 5 minutes at 140 °C and for a further post cure for 15 minutes at 200 °C to provide a complete coating of the substrate. The resistance to exposure to chemicals can be tested by only partially coating the panel and then submerging the panel in a test solution. The coated part will show resistance to chemicals, while the uncoated part will show corrosion, for example when exposed to bases (e. g. when using aq NaOH as test solution).

### Comparative example 1A

Example 1 was repeated except that perfluorotributylamine was used as a solvent. Only about half the amount of the perfluoroelastomer dissolved.

### Comparative example 1B

Example 1 was repeated except that 1,1,1,2,2,3,4,5,5,5-decafluoro-3-methoxy-4-trifluoromethyl pentane was used as solvent. A liquid solution was obtained that was more viscous than the solution of Example 1 (viscosity of 605 mPas).

### Example 2

A perfluoroelastomer composition containing 15 % by weight of a different perfluoroelastomer was prepared with the solvent of example 1 and analogue to example 1. The solution had a viscosity of 1640 mPas.

### Comparative example 2A

Example 2 was repeated except that 1,1,1,2,2,3,4,5,5,5-decafluoro-3-methoxy-4-trifluoromethyl pentane was used as solvent. A liquid solution was obtained that was more viscous and had a viscosity of 1860 mPas.

### Comparative example 2B

Example 2 was repeated except that perfluorotributylamine was used as a solvent. Only about half the amount of the perfluoroelastomer dissolved.

The following list of particular illustrative embodiments is provided for further illustration but without any intention to limit the present disclosure to the embodiments listed.
1. A composition comprising at least one fluoropolymer and at least one ketone solvent corresponding to the formula:

   Rf-X-Rf1

   wherein Rf is selected from perfluorinated and partially fluorinated alkyl groups that may be interrupted once or more than once by an ether oxygen, a carbonyl or a combination thereof, and Rf1 is selected from perfluorinated, partially fluorinated and non-fluorinated alkyl groups that may be interrupted once or more than once by an ether oxygen, a carbonyl or a combination thereof, and X is a carbonyl (C=O); wherein the ketone solvent contains 50 or less than 50 carbon atoms,
   and wherein the fluoropolymer is a copolymer of tetrafluoroethene (TFE) and one or more than one comonomer, wherein the polymer contains at least 30 % by weight of units derived from TFE and wherein the content of the units derived from the one or more comonomer is from about 1 to 70 % by weight based on the total weight of the copolymer which is 100 %.
2. The composition according to illustrative embodiment 1 wherein the solvent is branched and wherein, preferably, Rf1 is branched.
3. The composition according to any one of the preceding illustrative embodiments wherein the ketone solvent corresponds to the formula:

   CₚF₂ₚ₊₁-X-C_{q}F_{2q+1}

   wherein q is an integer from 1 to and 48 and p is an integer from 1 to 48 with the proviso that the sum of p and q is not greater than 49.
4. The composition according to any one of the preceding illustrative embodiments wherein the ketone solvent corresponds to the formula:

   CₚF₂ₚ₊₁-X-C_{q}F_{2q+1}

   wherein q is an integer from 1 to and 23 and p is an integer from 1 to 23 with the proviso that the sum of p and q is not greater than 24.
5. The composition according to any one of the preceding illustrative embodiments wherein the ketone solvent is selected from CF₃CF₂C(O)CF(CF₃)₂ (dodecafluoro-2-methylpentan-3-one); (CF₃)₂CFC(O)CF(CF₃)₂ (tetradecafluoro-2,4-dimethylpentan-3 -one); CF₃CF₂CF₂C(O)CF(CF₃)₂ tetradecafluoro-2-methylhexan-3-one; CF₃C(O)CF(CF₃)₂ (decafluoro-3-methylbutan-2-one) and mixtures thereof.
6. The composition according to any one of the preceding illustrative embodiments wherein the solvent is present in an amount of at least 35 % by weight, preferably at least 55 % by weight and most preferably at least 75 % by weight based on the total weight of the composition with the total weight of the composition being 100 %.
7. The composition according to any one of the preceding illustrative embodiments wherein the fluoropolymer comprises one or more than one perfluorinated comonomer.
8. The composition according to any one of the preceding illustrative embodiments wherein the fluoropolymer comprises one or more than one comonomer selected from perfluorinated alkyl ethers (PAE), corresponding to the general formula

   Rf-O-(CF₂)ₙ-CF=CF₂

   wherein n is 1 or 0 and R_{f} represents a perfluoroalkyl residue which may be interrupted once or more than once by an oxygen atom.
9. The composition according to any one of the preceding illustrative embodiments wherein the fluoropolymer comprises from 0 % by weight to less than 10 % by weight, preferably from 0 % by weight to less than 1 % by weight based on the total weight of the fluoropolymer of units derived from non-fluorinated or partially fluorinated comonomers.
10. The composition according to any one of the preceding illustrative embodiments wherein the fluoropolymer contains at least 50 % by weight of units derived from TFE.
11. The composition of any one of the preceding illustrative embodiments wherein the fluoropolymer is a curable fluoroelastomer.
12. The composition according to any one of the preceding illustrative embodiments wherein the fluoropolymer is a curable fluoroelastomer and further comprises cure sites selected from iodine and nitrile groups and wherein the composition further comprises at least one curing agent for curing the fluoroelastomer.
13. The composition according to any one of the preceding illustrative embodiments wherein the composition has a viscosity of less than 2500 mPas.
14. Method of making the composition of any of illustrative embodiments 1 to 13 comprising dissolving the fluoropolymer in the solvent.
15. An article comprising a coating obtained from the composition according to any one of illustrative embodiments 1 to 13.
16. A method of applying a fluoropolymer to a substrate, comprising
   (i) applying a composition according to any one of illustrative embodiments 1 to 13 to a substrate;
   (ii) removing the solvent and, optionally, when the fluoropolymer is curable, subjecting the composition to curing, wherein the optional curing step may be carried out after, simultaneously with or prior to removing the solvent.
17. The method of illustrative embodiment 16 wherein step (i) is carried out by a process selected from coating, printing, impregnating and combinations thereof.
18. Use of the composition according to any one of illustrative embodiments 1 to 13 for applying a fluoropolymer onto a substrate.
19. The use of illustrative embodiment 17, for applying a fluoropolymer onto a substrate coating, printing, impregnating or a combination thereof.

## Claims

1. A composition comprising at least one fluoropolymer and at least one ketone solvent corresponding to the formula:
Rf-X-Rf1
wherein Rf is selected from perfluorinated and partially fluorinated alkyl groups that may be interrupted once or more than once by an ether oxygen, a carbonyl or a combination thereof, and Rf1 is selected from perfluorinated, partially fluorinated and non-fluorinated alkyl groups that may be interrupted once or more than once by an ether oxygen, a carbonyl or a combination thereof, and X is a carbonyl (C=O); wherein the ketone solvent contains 50 or less than 50 carbon atoms,
and wherein the fluoropolymer is a copolymer of tetrafluoroethene (TFE) and one or more than one comonomer, wherein the polymer contains at least 30 % by weight of units derived from TFE and wherein the content of the units derived from the one or more comonomer is from about 1 to 70 % by weight based on the total weight of the copolymer which is 100 %.

2. The composition according to claim 1 wherein the solvent is branched and wherein, preferably, Rf1 is branched.

3. The composition according to any one of the preceding claims wherein the ketone solvent corresponds to the formula:
CₚF₂ₚ₊₁-X-C_{q}F_{2q+1}
wherein q is an integer from 1 to and 48 and p is an integer from 1 to 48 with the proviso that the sum of p and q is not greater than 49.

4. The composition according to any one of the preceding claims wherein the ketone solvent corresponds to the formula:
CₚF₂ₚ₊₁-X-C_{q}F_{2q+1}
wherein q is an integer from 1 to and 23 and p is an integer from 1 to 23 with the proviso that the sum of p and q is not greater than 24.

5. The composition according to any one of the preceding claims wherein the ketone solvent is selected from CF₃CF₂C(O)CF(CF₃)₂ (dodecafluoro-2-methylpentan-3-one); (CF₃)₂CFC(O)CF(CF₃)₂ (tetradecafluoro-2,4-dimethylpentan-3-one); CF₃CF₂CF₂C(O)CF(CF₃)₂ tetradecafluoro-2-methylhexan-3-one; CF₃C(O)CF(CF₃)₂ (decafluoro-3-methylbutan-2-one) and mixtures thereof.

6. The composition according to any one of the preceding claims wherein the solvent is present in an amount of at least 35 % by weight, preferably at least 55 % by weight and most preferably at least 75 % by weight based on the total weight of the composition with the total weight of the composition being 100 %.

7. The composition according to any one of the preceding claims wherein the fluoropolymer comprises one or more than one perfluorinated comonomer.

8. The composition according to any one of the preceding claims wherein the fluoropolymer comprises one or more than one comonomer selected from perfluorinated alkyl ethers (PAE), corresponding to the general formula
Rf-O-(CF₂)ₙ-CF=CF₂
wherein n is 1 or 0 and R_{f} represents a perfluoroalkyl residue which may be interrupted once or more than once by an oxygen atom.

9. The composition according to any one of the preceding claims wherein the fluoropolymer comprises from 0 % by weight to less than 10 % by weight, preferably from 0 % by weight to less than 1 % by weight based on the total weight of the fluoropolymer of units derived from non-fluorinated or partially fluorinated comonomers.

10. The composition according to any one of the preceding claims wherein the fluoropolymer contains at least 50 % by weight of units derived from TFE.

11. The composition of any one of the preceding claims wherein the fluoropolymer is a curable fluoroelastomer.

12. The composition according to any one of the preceding claims wherein the fluoropolymer is a curable fluoroelastomer and further comprises cure sites selected from iodine and nitrile groups and wherein the composition further comprises at least one curing agent for curing the fluoroelastomer.

13. The composition according to any one of the preceding claims wherein the composition has a viscosity of less than 2500 mPas.

14. Method of making the composition of any of claims 1 to 13 comprising dissolving the fluoropolymer in the solvent.

15. An article comprising a coating obtained from the composition according to any one of claims 1 to 13.

16. A method of applying a fluoropolymer to a substrate, comprising
(i) applying a composition according to any one of claims 1 to 13 to a substrate;
(ii) removing the solvent and, optionally, when the fluoropolymer is curable, subjecting the composition to curing, wherein the optional curing step may be carried out after, simultaneously with or prior to removing the solvent.

17. The method of claim 16 wherein step (i) is carried out by a process selected from coating, printing, impregnating and combinations thereof.

18. Use of the composition according to any one of claims 1 to 13 for applying a fluoropolymer onto a substrate, preferably for applying by coating, printing, impregnating or a combination thereof.
